# EUROPÄISCHE PATENTANMELDUNG

(11) **EP 4 813 344 A1**
(43) Veröffentlichungstag der Anmeldung: **30.09.2026**
(21) Anmeldenummer: 26166842.0
(22) Anmeldetag: 23.03.2026
(51) Int. Cl.: A61C 5/77, A61C 7/08, A61C 13/00, B33Y 30/00, B33Y 80/00

(54) **VERFAHREN ZU EINER HERSTELLUNG EINER DENTALEN VORRICHTUNG**

(30) Priorität: 24.03.2025 DE 102025111307
(71) Anmelder: Renfert GmbH, 78247 Hilzingen (DE)
(72) Erfinder: Flögel, Rupert, 64853 Otzberg (DE)
(74) Vertreter: Daub, Thomas

(57) **Zusammenfassung**

Die Erfindung geht aus von einem Verfahren zu einer Herstellung einer dentalen Vorrichtung (10, 10', 10"), insbesondere einer Einzelkrone, einer mehrgliedrigen Brücke und/oder eines Aligners, mittels eines Dentalfilamentdrucksystems, wobei in zumindest einem Konvertierungsschritt (12) eine CAD-Datei der dentalen Vorrichtung (10, 10', 10") mittels einer Recheneinheit (14) in Druckbefehle konvertiert wird und wobei die Druckbefehle mittels der 3D-Filament-Druckvorrichtung (16) in einem Druckschritt (18) ausgeführt werden und die dentale Vorrichtung (10, 10', 10") gedruckt wird.

Es wird vorgeschlagen, dass in zumindest einem Ausrichtungsschritt (20) vor dem Druckschritt (18) eine Ausrichtung der dentalen Vorrichtung (10, 10', 10") für einen Druck, insbesondere mittels der Recheneinheit (14), insbesondere selbsttätig, bestimmt wird, wobei die Ausrichtung derart gewählt wird, dass eine Kaufläche (22, 22') und/oder eine Kauflächenreferenzfläche (24) quer zu einer Druckebene (26) ausgerichtet ist.

## Beschreibung

### Stand der Technik

Die Erfindung betrifft ein Verfahren zu einer Herstellung einer dentalen Vorrichtung, insbesondere einer Einzelkrone, einer mehrgliedrigen Brücke und/oder eines Aligners, mittels eines Dentalfilamentdrucksystems.

Es ist bereits ein Verfahren zu einer Herstellung einer dentalen Vorrichtung mittels eines Dentalfilamentdrucksystems vorgeschlagen worden, wobei in zumindest einem Konvertierungsschritt eine CAD-Datei der dentalen Vorrichtung mittels einer Recheneinheit in Druckbefehle konvertiert wird, wobei in zumindest einem Übertragungsschritt die Druckbefehle auf eine 3D-Filament-Druckvorrichtung übertragen werden und wobei die Druckbefehle mittels der 3D-Filament-Druckvorrichtung in einem Druckschritt ausgeführt werden und die dentale Vorrichtung gedruckt wird.

Die Aufgabe der Erfindung besteht insbesondere darin, eine gattungsgemäße Vorrichtung mit verbesserten Eigenschaften hinsichtlich einer Qualität, insbesondere einer Oberflächenqualität, der dentalen Vorrichtung bereitzustellen. Zudem wird durch die Erfindung die entscheidende Passung zwischen der Patientensituation und der gedruckten dentalen Vorrichtung deutlich verbessert. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Verfahren zu einer Herstellung einer dentalen Vorrichtung, insbesondere einer Einzelkrone, einer mehrgliedrigen Brücke und/oder eines Aligners, mittels eines Dentalfilamentdrucksystems, wobei in zumindest einem Konvertierungsschritt eine CAD-Datei der dentalen Vorrichtung mittels einer Recheneinheit in Druckbefehle konvertiert wird und wobei die Druckbefehle mittels der 3D-Filament-Druckvorrichtung in einem Druckschritt ausgeführt werden und die dentale Vorrichtung gedruckt wird. Vorzugsweise werden die Druckbefehle in zumindest einem Übertragungsschritt vor einem Druck auf eine 3D-Filament-Druckvorrichtung übertragen.

Es wird vorgeschlagen, dass in zumindest einem Ausrichtungsschritt vor dem Druckschritt eine Ausrichtung der dentalen Vorrichtung für einen Druck, insbesondere mittels der Recheneinheit, insbesondere selbsttätig, bestimmt wird, wobei die Ausrichtung derart gewählt wird, dass eine Kaufläche und/oder eine Kauflächenreferenzfläche quer zu einer Druckebene ausgerichtet ist. Vorzugsweise wird in dem Ausrichtungsschritt vor dem Druckschritt eine Ausrichtung der dentalen Vorrichtung für einen Druck mittels der Recheneinheit selbsttätig und/oder unterstützt bestimmt. Vorzugsweise wird in dem Ausrichtungsschritt vor dem Druckschritt eine Ausrichtung der dentalen Vorrichtung für einen Druck mittels der Recheneinheit selbsttätig bestimmt. Es wäre jedoch auch denkbar, dass in dem Ausrichtungsschritt vor dem Druckschritt eine Ausrichtung der dentalen Vorrichtung für einen Druck mittels der Recheneinheit unterstützt bestimmt wird, wobei die Ausrichtung insbesondere von einem Bediener manuell gewählt wird, jedoch von der Recheneinheit Optimierungsmöglichkeiten und/oder zumindest ein aktueller Oberflächenanalyseparameter bei einer entsprechenden Ausrichtung ausgegeben wird. Unter einem "Dentalfilamentdrucksystem" soll in diesem Zusammenhang insbesondere ein System mit zumindest einer 3D-Filament-Druckvorrichtung und einer Recheneinheit zur Erzeugung der Druckparameter, insbesondere der Druckbefehle, verstanden werden. Die Recheneinheit ist insbesondere zur Ausführung einer Slicer-Software vorgesehen. Die Recheneinheit kann dabei sowohl separat ausgebildet sein, als auch in die 3D-Filament-Druckvorrichtung integriert ausgebildet sein.

Vorzugsweise ist die 3D-Filament-Druckvorrichtung zumindest ein Teil, bevorzugt eine Unterbaugruppe, eines 3D-Druckers. Insbesondere kann die 3D-Filament-Druckvorrichtung den gesamten 3D-Drucker umfassen. Vorzugsweise ist die 3D-Filament-Druckvorrichtung zu einem ausschließlichen Drucken von zahnärztlichen und/oder kieferorthopädischen dentalen Vorrichtungen, wie beispielsweise Einzelkronen, mehrgliedrigen Brücken und/oder Alignern, vorgesehen. Insbesondere sind die zahnärztlichen und/oder kieferorthopädischen dentalen Vorrichtungen ausschließlich Einzelkronen, mehrgliedrige Brücken, Dentalmodelle, Bohrschablonen, Abdrucklöffel und/oder Aligner. Vorzugsweise ist die 3D-Filament-Druckvorrichtung dazu ausgebildet, einem Nutzer zu erlauben auszuwählen, ob eine Einzelkrone, eine Brücke, ein Dentalmodell, ein Abdrucklöffel und/oder ein Aligner gedruckt werden soll, sodass der Nutzer lediglich das entsprechende digitale Modell des Dentalmodells, des Abdrucklöffels und/oder des Aligners einstellen kann und der Druck sofort startet, insbesondere sofern keine Fehlermeldungen vorliegen. Darunter, dass ein Objekt zu einer bestimmten Funktion vorgesehen oder ausgebildet ist, soll vorzugsweise verstanden werden, dass das Objekt diese bestimmte Funktion in zumindest einem Anwendungs- und/oder Betriebszustand erfüllt und/oder ausführt.

Unter einer "dentalen Vorrichtung" soll in diesem Zusammenhang insbesondere eine zahnärztliche und/oder kieferorthopädische dentale Vorrichtung verstanden werden, wie beispielsweise Restaurationen, Dentalmodelle, Abdrucklöffel, dentale oder kieferorthopädische Bohrschablonen und/oder Aligner. Es sind insbesondere verschiedene, einem Fachmann als sinnvoll erscheinende dentale Vorrichtungen denkbar. Vorzugsweise ist die dentale Vorrichtung insbesondere von einer Einzelkrone, einer mehrgliedrigen Brücke, einer Bohrschablone, einem Abdrucklöffel und/oder einem Aligner gebildet.

Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Vorzugsweise ist die Recheneinheit dazu vorgesehen, eine CAD-Datei der dentalen Vorrichtung zumindest im Wesentlichen selbsttätig in Druckbefehle, insbesondere in einen G-Code, zu konvertieren. Vorzugsweise ist die Recheneinheit dazu vorgesehen, die Daten der CAD-Datei auszulesen und daraus Verfahrwege und/oder Materialaustragungen der 3D-Filament-Druckvorrichtung abzuleiten. Vorzugsweise kann die CAD-Datei beispielsweise über die Speichereinheit, über einen Server oder ein externes Speichermedium bereitgestellt werden. Die CAD-Datei ist insbesondere von einer STL-Datei gebildet, die auch zusätzliche Informationen in Form von weiteren Dateien beinhalten kann. Bevorzugt werden die Druckbefehle mittels einer Slicer-Software der Recheneinheit erzeugt.

Vorzugsweise ist die Recheneinheit ferner dazu vorgesehen, die CAD-Datei auf Einhaltung von zu der zumindest einen dentalen Vorrichtung gehörenden Standarddruckbedingungen für die 3D-Filament-Druckvorrichtung zu prüfen, wobei die Standarddruckbedingungen insbesondere sowohl spezifisch für die 3D-Filament-Druckvorrichtung als auch spezifisch für die zu druckende dentale Vorrichtung sind. Die Standarddruckbedingungen dienen insbesondere dazu, eine Kompatibilität zwischen der 3D-Filament-Druckvorrichtung und der CAD-Datei abzugleichen.

Unter einer "Ausrichtung der dentalen Vorrichtung für einen Druck" soll in diesem Zusammenhang insbesondere die Ausrichtung der dentalen Vorrichtung auf einem Druckbett der 3D-Filament-Druckvorrichtung virtuell vor einem Druck bzw. physisch während eines Drucks bzw. bei Beendigung des Drucks verstanden werden. Vorzugsweise wird die dentale Vorrichtung in dieser Ausrichtung auf das Druckbett gedruckt. Die Ausrichtung der dentalen Vorrichtung bezieht sich dabei insbesondere auf eine räumliche, dreidimensionale Lage der dentalen Vorrichtung in einem Druckraum der 3D-Filament-Druckvorrichtung. Die Ausrichtung wird dabei vor einem Druck und damit auch vor einem Vorhandensein der dentalen Vorrichtung bestimmt, wobei die dentale Vorrichtung während des Drucks in der entsprechenden Ausrichtung erzeugt wird. Die Ausrichtung der dentalen Vorrichtung bestimmt dabei insbesondere auch die Ausrichtung und Lage der während des Drucks erzeugten Lagen zur Erstellung der dentalen Vorrichtung relativ zu der dentalen Vorrichtung. Ferner sind die erzeugten Lagen der dentalen Vorrichtung abhängig von einer Ausrichtung der dentalen Vorrichtung für den Druck anders geformt. Abhängig von der Ausrichtung der dentalen Vorrichtung werden daher insbesondere unterschiedliche Oberflächen erzeugt. Durch die Ausrichtung der dentalen Vorrichtung kann daher insbesondere auch ein Verbund zwischen den Drucklagen oder auch Fehlstellen beeinflusst werden. Fehlstellen sind dabei insbesondere von Bereichen auf der Oberfläche der dentalen Vorrichtung gebildet, in welchen die gedruckte dentale Vorrichtung aufgrund der Lagendicke und der Oberflächenneigung und/oder aufgrund des Zusammenspiels aus Filament und Druckdüse wesentlich von der CAD-Datei abweicht. Insbesondere bei Oberflächen, welche zwischen 0° und 10°, bevorzugt zwischen 0° und 5° gegenüber der Druckebene geneigt sind, liegen die letzten eine Oberfläche ausbildenden Filamentstränge aufeinanderfolgender Lagen weit auseinander, sodass Fehlstellen entstehen. Fehlstellen können dabei insbesondere bei starken Unebenheiten der Oberfläche des dentalen Objekts entstehen, da die Druckvorrichtung nicht in langen Bahnen in der Druckebene ihre Lagen ablegen kann, insbesondere am Ende oder Anfang des Druckvorgangs bei den Höckerspitzen bzw. Fissuren einer Einzelkrone oder Brücke. Es kann insbesondere teilweise lediglich ein punktueller Aufbau anstelle eines Lagenaufbaus realisiert werden, was zu Fehlstellen führt.

Unter einer "Kaufläche" soll in diesem Zusammenhang insbesondere eine plateauartige Fläche einer Einzelkrone und/oder einer Brücke und/oder eine Schneidkante einer Schneidezahnkrone verstanden werden, die dazu vorgesehen ist, mit dem Antagonisten des Gegenkiefers in Kontakt zu stehen. Die Kaufläche einer Krone für Prämolaren und Molaren weist eine charakteristische Oberfläche mit Höckern, Fissuren und Randleisten auf, die auch als Kauflächenrelief bezeichnet wird. Ferner soll unter einer "Kauflächenreferenzfläche" insbesondere eine Fläche einer dentalen Vorrichtung, insbesondere einer Bohrschablone oder eines Aligners verstanden werden, die korrespondierend zu einer Kaufläche ausgebildet ist. Vorzugsweise ist die Kauflächenreferenzfläche bei einer Anwendung der dentalen Vorrichtung dazu vorgesehen, direkt an einer Kaufläche anzuliegen. Vorzugsweise ist die Kauflächenreferenzfläche individuell an eine definierte Kauflächengeometrie angepasst. Die Kauflächenreferenzfläche dient beispielsweise zu einer definierten Ausrichtung der dentalen Vorrichtung an einer Kaufläche eines vorhandenen Zahns.

Vorzugsweise ist die Recheneinheit dazu vorgesehen, selbsttätig eine Lage der Kaufläche und/oder der Kauflächenreferenzfläche anhand der CAD-Daten zu erfassen. Die Kaufläche und/oder die Kauflächenreferenzfläche weist dabei insbesondere eine Haupterstreckungsebene auf, welche von der Recheneinheit selbsttätig erfasst wird. Grundsätzlich wäre jedoch auch denkbar, dass grundsätzlich und/oder bei fehlender Erkennbarkeit der Recheneinheit eine Lage der Kaufläche und/oder der Kauflächenreferenzfläche durch einen Bediener vorgeben wird und/oder die Recheneinheit eine Bedieneranfrage stellt, in welcher der Bediener die Lage der Kaufläche und/oder der Kauflächenreferenzfläche bestätigen oder angeben muss.

Unter "quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist.

Unter einer "Druckebene" soll insbesondere eine Ebene verstanden werden, zu welcher die Drucklagen jeweils parallel ausgerichtet sind. Vorzugsweise werden die Drucklagen in einer Ebene parallel zu der Druckebene aufgebracht. Die Druckebene erstreckt sich insbesondere parallel zu einer Haupterstreckungsebene und/oder parallel zu einer Oberfläche des Druckbetts, insbesondere des Drucktischs. Die Druckebene ist insbesondere von einer x-y-Ebene der 3D-Filament-Druckvorrichtung gebildet. Die Druckebene erstreckt sich insbesondere senkrecht zu einer Ausrichtung des Druckkopfs. Unter einer "Haupterstreckungsebene" eines Objekts und/oder einer Oberfläche, wie insbesondere des Druckbetts, der Kaufläche, der Kauflächenreferenzfläche und/oder der dentalen Vorrichtung, soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Durch das erfindungsgemäße Verfahren kann insbesondere die Entstehung von Fehlstellen auf der Kaufläche und/oder der Kauflächenreferenzfläche vermieden werden. An die Kaufläche und/oder die Kauflächenreferenzfläche sind insbesondere hohe Anforderungen hinsichtlich der Oberflächenqualität gestellt, sodass Fehler in der Kaufläche eine aufwendige Nachbearbeitung, beispielsweise nachträgliches Polieren, erfordern. Durch das erfindungsgemäße Verfahren kann insbesondere eine aufwendige und komplizierte Nachbearbeitung vermieden werden. Des Weiteren können mögliche Fehlstellen insbesondere in unwichtigere, insbesondere unkritische Bereiche, verlagert werden, in welchen geringere Anforderungen hinsichtlich der Oberflächenqualität bestehen. Ferner kann die Anzahl und/oder die Oberfläche von Fehlstellen vorteilhaft gering gehalten werden. Hierdurch kann wiederum eine hohe Oberflächenqualität erreicht werden.

Ferner wird vorgeschlagen, dass in dem Ausrichtungsschritt die Ausrichtung derart gewählt wird, dass eine Haupterstreckungsebene der dentalen Vorrichtung einen Winkel von mehr als 40°, vorzugsweise mehr als 50° und besonders bevorzugt mehr als 60° gegenüber einer Druckebene einschließt. Vorzugsweise beträgt der Winkel zwischen 60° und 90°, bevorzugt zwischen 70° und 85°. Besonders bevorzugt erstreckt sich die Haupterstreckungsebene der dentalen Vorrichtung zumindest im Wesentlichen parallel zu der Kaufläche und/oder der Kauflächenreferenzfläche. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Dadurch kann insbesondere zuverlässig vermieden werden, dass Teile der Oberfläche der Kaufläche und/oder der Kauflächenreferenzfläche zwischen 0° und 10° gegenüber der Druckebene geneigt sind. Hierdurch können wiederum zuverlässig Fehlstellen auf der Kaufläche und/oder der Kauflächenreferenzfläche vermieden werden. Des Weiteren können mögliche Fehlstellen insbesondere in unwichtigere, insbesondere unkritische Bereiche, verlagert werden, in welchen geringere Anforderungen hinsichtlich der Oberflächenqualität bestehen. Zudem wird die Passung signifikant verbessert.

Des Weiteren wird vorgeschlagen, dass in dem Ausrichtungsschritt die Ausrichtung derart gewählt wird, dass eine Richtung einer maximalen Erstreckung und/oder einer maximalen Erstreckung senkrecht zu einer Haupterstreckungsrichtung der dentalen Vorrichtung senkrecht zu der Druckebene ausgerichtet ist. Vorzugsweise wird die dentale Vorrichtung, insbesondere zu einer Vermeidung von Fehlstellen auf der Kaufläche und/oder der Kauflächenreferenzfläche, derart für den Druck ausgerichtet, dass eine Gerade, welche die beiden am weitesten beabstandeten Punkte der dentalen Vorrichtung verbindet, und/oder eine Gerade, welche senkrecht zu einer Haupterstreckungsrichtung der dentalen Vorrichtung die beiden am weitesten beabstandeten Punkte der dentalen Vorrichtung verbindet, senkrecht zu der Druckebene ausgerichtet ist. Unter einer "Haupterstreckungsrichtung" eines Objekts, wie insbesondere der dentalen Vorrichtung, soll dabei insbesondere eine Richtung verstanden werden, welche parallel zu einer längsten Kante eines kleinsten geometrischen Quaders verläuft, welcher das Objekt gerade noch vollständig umschließt. Unter einer "maximalen Erstreckung" eines Objekts soll insbesondere die Strecke und/oder der Vektor mit der längsten Erstreckung verstanden werden, welcher gerade vollständig innerhalb des Objekts liegt. Dadurch kann die dentale Vorrichtung insbesondere vertikal anhand einer Diagonalen ausgerichtet werden. Hierdurch kann insbesondere erreicht werden, dass ein oberster Punkt der dentalen Vorrichtung während des Drucks von einer Ecke der dentalen Vorrichtung gebildet ist. Hierdurch können wiederum zuverlässig Fehlstellen auf der Kaufläche und/oder der Kauflächenreferenzfläche vermieden werden. Des Weiteren können mögliche Fehlstellen insbesondere in unwichtigere, insbesondere unkritische Bereiche, verlagert werden, in welchen geringere Anforderungen hinsichtlich der Oberflächenqualität bestehen. Vorzugsweise können mögliche Fehlstellen in einen Übergangsbereich zwischen einer mesialen bzw. distalen und einer bukkalen bzw. palatinalen Seitenfläche verschoben werden, welche keine speziellen Oberflächenanforderungen aufweist.

Es wird ferner vorgeschlagen, dass in dem Ausrichtungsschritt die Recheneinheit eine Ausrichtung der dentalen Vorrichtung für den Druck, insbesondere selbsttätig, anhand zumindest eines Oberflächenanalyseparameters wählt. Vorzugsweise können bei einer Bestimmung der Ausrichtung ein oder mehrere Oberflächenanalyseparameter berücksichtigt werden. Die Oberflächenanalyseparameter können dabei grundsätzlich unterschiedliche Gewichtungen aufweisen. Es sind verschiedene, einem Fachmann als sinnvoll erscheinende Oberflächenanalyseparameter denkbar. Unter einem "Oberflächenanalyseparameter" soll in diesem Zusammenhang insbesondere ein Parameter verstanden werden, welcher Rückschluss auf eine durch einen Druckprozess entstehende Oberflächenqualität gibt. Vorzugsweise gibt der Oberflächenanalyseparameter Rückschluss auf mögliche Fehlstellen und deren Auswirkung, wie beispielsweise aufgrund der Lage. Es wird weiter vorgeschlagen, dass ein Oberflächenanalyseparameter von einem Parallelflächenanteil von Flächen der dentalen Vorrichtung, welche zumindest zwischen 0° und 10° relativ zu der Druckebene ausgerichtet sind, gebildet ist, wobei die Recheneinheit in dem Ausrichtungsschritt einen Parallelflächenanteil so gering wie möglich wählt. Insbesondere bei Zahnoberflächen wie der Kaufläche, welche starke Unebenheiten, wie Höckerspitzen und/oder Fissuren aufweist, sinkt mit steigendem Parallelflächenanteil insbesondere die durchschnittliche Oberflächenqualität. Je größer der Parallelflächenanteil also ist, desto mehr Nachbearbeitung ist erforderlich. Bei einer Bestimmung der Ausrichtung der dentalen Vorrichtung für einen Druck wird also von der Recheneinheit versucht, den Parallelflächenanteil so gering wie möglich zu halten. Unter einem "Parallelflächenanteil" soll in diesem Zusammenhang insbesondere ein Anteil von Flächen der Oberfläche der dentalen Vorrichtung, welche zumindest zwischen 0° und 10° relativ zu der Druckebene ausgerichtet sind, relativ zu einer Gesamtoberfläche der dentalen Vorrichtung verstanden werden. Es wird ferner vorgeschlagen, dass ein Oberflächenanalyseparameter von einer Parallelflächenposition gebildet ist, wobei die Recheneinheit in dem Ausrichtungsschritt Flächen mit einem Winkel zwischen 0° und 10° relativ zu der Druckebene in unkritische Oberflächenbereiche legt. Unter einer "Parallelflächenposition" soll in diesem Zusammenhang insbesondere die funktionale Position der Parallelflächen auf der dentalen Vorrichtung verstanden werden. So kann eine Parallelfläche beispielsweise auf einer Kaufläche, auf einer bukkalen Seitenfläche, auf einer mesialen Seitenfläche, auf einer palatinalen Seitenfläche, auf einer distalen Seitenfläche, auf einer lingualen Seitenfläche, auf einer Innenfläche oder in einem Übergangsbereich zwischen zwei Flächen angeordnet sein. Die verschiedenen Flächen weisen dabei insbesondere unterschiedliche Qualitätsanforderungen auf, sodass Parallelflächen abhängig von ihrer funktionalen Position unterschiedlich negativen Einfluss auf ein Druckergebnis bzw. die gedruckte dentale Vorrichtung aufweisen. Bei einer Bestimmung der Ausrichtung der dentalen Vorrichtung wird daher insbesondere versucht, einen negativen Einfluss der Oberflächenanalyseparameter so gering wie möglich zu halten. Die verschiedenen Oberflächenanalyseparameter können dazu insbesondere verschiedene Bewertungskriterien und verschiedene Gewichtungen aufweisen, sodass ein optimaler Wert ermittelt werden kann. Dadurch kann insbesondere anhand verschiedener Parameter eine optimale Ausrichtung ermittelt werden, wobei sowohl die Anzahl der Fehlstellen, als auch deren Position berücksichtigt werden kann. Hierdurch können wiederum zuverlässig Fehlstellen auf funktional wichtigen Oberflächen vermieden werden. Des Weiteren können mögliche Fehlstellen insbesondere in unwichtigere, insbesondere unkritische Bereiche, verlagert werden, in welchen geringere Anforderungen hinsichtlich der Oberflächenqualität bestehen.

Es wird weiter vorgeschlagen, dass in dem Ausrichtungsschritt die Recheneinheit eine Ausrichtung der dentalen Vorrichtung für den Druck selbsttätig mittels eines Algorithmus und/oder einer Kl-Anwendung, insbesondere mittels einer Meshanalyse, einer CAD-Datei der dentalen Vorrichtung wählt, wobei zumindest eine Anzahl an Fehlstellen minimiert wird und/oder Fehlstellen in unkritische Oberflächenbereiche gelegt werden. Vorzugsweise verfügt die Recheneinheit insbesondere über einen Auswertealgorithmus und/oder eine künstliche Intelligenz zur Bestimmung der Ausrichtung der dentalen Vorrichtung oder kann beispielsweise auf einen cloudbasierten Auswertealgorithmus und/oder eine cloudbasierte künstliche Intelligenz zugreifen. Bevorzugt verfügt die Recheneinheit dazu über einen Internetzugriff. Bei einer Meshanalyse wird insbesondere ein Mesh des Objekts der CAD-Datei im Hinblick auf eine Druckbarkeit analysiert. Dabei werden insbesondere auch die Winkel und Lagen von Teilflächen analysiert um beispielsweise mögliche Fehlstellen bereits vor einem Druck und insbesondere auch bereits vor einer Umwandlung in Druckbefehle, insbesondere einen G-Code, zu erfassen. Mittels des Auswertealgorithmus und/oder der künstlichen Intelligenz können mögliche Auswirkungen einer Veränderung der Lage der dentalen Vorrichtung während eines Drucks vorbestimmt werden und abhängig davon eine Ausrichtung gewählt werden. Dadurch kann insbesondere eine hinsichtlich der Fehlstellen optimale Drucklage der dentalen Vorrichtung bestimmt werden.

Ferner wird vorgeschlagen, dass in einem Optimierungsschritt, insbesondere mittels der Recheneinheit, selbsttätig eine Stützstruktur für den Druck der dentalen Vorrichtung berechnet wird, welche mit der dentalen Vorrichtung gedruckt wird, wobei die Stützstruktur derart berechnet wird, dass ein zumindest annähernd rückstandsloses Entfernen der Stützstruktur durch Ausbrechen möglich ist. Die Stützstruktur dient insbesondere zu einer Stabilisierung und einer teilweisen Realisierung einer Druckbarkeit der dentalen Vorrichtung. Die Stützstruktur ist nicht Teil der dentalen Vorrichtung und dient lediglich der Unterstützung während des Drucks. Durch die spezielle Lage der dentalen Vorrichtung können die Anzahl der Anbindungspunkte zwischen der Stützstruktur und der dentalen Vorrichtung vorteilhaft gering gehalten werden. Es muss insbesondere vorteilhaft lediglich ein unteres Ende sowie ein oberes Ende unterstützt werden. Es kann insbesondere auf eine Unterstützung der Kaufläche und/oder der Kauflächenreferenzfläche bzw. deren Rückseite verzichtet werden. Ein leichtes, rückstandsloses Ausbrechen kann insbesondere durch eine Optimierung und Minimierung einer Anzahl an Anbindungspunkten zwischen der Stützstruktur und der dentalen Vorrichtung während des Drucks erreicht werden. Durch die spezielle Ausrichtung kann insbesondere eine Grundfläche der dentalen Vorrichtung in einer Draufsicht senkrecht zu der Druckebene vorteilhaft gering gehalten werden, was wiederum die Anzahl der Anbindungspunkte vorteilhaft verringert.

Des Weiteren wird vorgeschlagen, dass in dem Optimierungsschritt die Stützstruktur derart gestaltet wird, dass sich ein Großteil des Stützmaterials in einer Kavität der dentalen Vorrichtung befindet. Vorzugsweise befindet sich ein Großteil des Stützmaterials in einer rückseitigen Kavität der dentalen Vorrichtung, welche zu einer Aufnahme eines Zahnstumpfs, zumindest eines Zahns und/oder eines Implantataufbaus vorgesehen ist. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden.

Dadurch kann insbesondere erreicht werden, dass die Anbindungspunkte der Stützstruktur vorteilhalft zu einem Großteil innerhalb der Kavität der dentalen Vorrichtung angeordnet sind. Dadurch können insbesondere Anbindungspunkte in kritischen Bereichen der dentalen Vorrichtung vorteilhaft vermieden werden.

Zudem wird vorgeschlagen, dass in dem Optimierungsschritt die Stützstruktur derart gestaltet wird, dass eine Grundfläche des Stützmaterials nicht über die dentale Vorrichtung in einer Druckaufsicht hinausragt. Vorzugsweise wird die Stützstruktur derart gestaltet, dass eine Grundfläche des Stützmaterials nicht über die dentale Vorrichtung am Ende des Druckprozesses in einer Druckaufsicht hinausragt. Bevorzugt überragt die dentale Vorrichtung am Ende des Druckprozesses die Stützstruktur in einer Druckaufsicht senkrecht zu der Druckebene. Dadurch kann insbesondere eine vorteilhaft kompakte Stützstruktur bereitgestellt werden. Es kann insbesondere ein Filamentbedarf für die Stützstruktur vorteilhaft gering gehalten werden.

Ferner wird vorgeschlagen, dass die dentale Vorrichtung in dem Druckschritt mittels der Stützstruktur angehoben ist und frei von einem Kontakt mit einem Druckbett der 3D-Filament-Druckvorrichtung ist. Vorzugsweise ist die dentale Vorrichtung um zumindest zwei Schichten, vorzugsweise um zumindest drei Schichten von einem Druckbett der 3D-Filament-Druckvorrichtung abgehoben. Des Weiteren wird vorgeschlagen, dass die Stützstruktur einen Sockel zur lateralen Abstützung der dentalen Vorrichtung während des Drucks ausbildet. Vorzugsweise bildet die Stützstruktur unter der dentalen Vorrichtung einen massiven Sockel aus, welcher zu einer Abstützung der dentalen Vorrichtung vorgesehen ist und welcher dazu vorgesehen ist, auf die dentale Vorrichtung wirkende laterale Kräfte abzufangen. Mittels des Sockels wird insbesondere ein vorteilhaft tiefer Schwerpunkt erzeugt, was insbesondere bei dem durch die Ausrichtung entstehenden hochbauenden Aufbau der dentalen Vorrichtung vorteilhaft ist. Dadurch kann ein Kontakt der dentalen Vorrichtung mit einem Druckbett der 3D-Filament-Druckvorrichtung vermieden werden. Bei Kontakt mit dem Druckbett der 3D-Filament-Druckvorrichtung entstehen aufgrund der geringen Maße der dentalen Vorrichtung insbesondere Ungenauigkeiten in den Maßen sowie Fehler in der Oberfläche, die wiederum zu schlechten Passungen im Patientenmund führen können. Ferner kann eine vorteilhaft hohe Stabilität erreicht werden.

Zudem wird vorgeschlagen, dass in einem Optimierungsschritt, insbesondere mittels der Recheneinheit, selbsttätig abhängig von einer Erstreckung der dentalen Vorrichtung senkrecht zu der Druckebene eine Drucklagenstärke für den Druck der dentalen Vorrichtung berechnet wird. Vorzugsweise ist die Recheneinheit dazu vorgesehen, insbesondere mittels der Slicer-Software, insbesondere nach einer Ausrichtung der dentalen Vorrichtung für den Druck, selbsttätig aus dem Z-Maß der dentalen Vorrichtung die Drucklagenstärke, insbesondere die Layerstärke, für den Druck zu bestimmen. Die Bestimmung der Drucklagenstärke erfolgt insbesondere derart, dass alle Drucklagen der dentalen Vorrichtung gleich hoch sind. Hierdurch kann insbesondere vermieden werden, dass alle Drucklagen bis auf die letzte Drucklage mit derselben Drucklagenstärke gedruckt werden und nur die letzte Drucklage auf ein, insbesondere ungünstiges, Maß gebracht werden muss, um das richtige gesamte Z-Maß zu erreichen. Dadurch könnte die Fehlstellen noch weiter optimiert werden.

Ferner schlägt die Erfindung ein Dentalfilamentdrucksystem zur Durchführung eines Verfahrens zu einer Herstellung einer dentalen Vorrichtung, insbesondere einer Einzelkrone, einer mehrgliedrigen Brücke und/oder eines Aligners, vor, mit einer 3D-Filament-Druckvorrichtung, insbesondere ausschließlich zum Drucken von dentalen Vorrichtungen, welche eine Filamentreservoireinheit zu einer Aufnahme eines Filaments, zumindest einen Druckkopf und eine Steuer- und/oder Regeleinheit aufweist, und mit einer Recheneinheit, welche dazu vorgesehen ist, eine CAD-Datei der dentalen Vorrichtung in Druckbefehle zu konvertieren und welche zumindest eine Speichereinheit umfasst. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- und/oder Regeleinheit dient insbesondere zu einer Steuerung und/oder Regelung eines Betriebs der 3D-Filament-Druckvorrichtung. Die Steuer- und/oder Regeleinheit dient insbesondere zu einer Steuerung der Komponenten der 3D-Filament-Druckvorrichtung. Vorzugsweise ist die Steuer- und/oder Regeleinheit dazu ausgebildet, das Filament aus einer Filamentreservoireinheit zu dem Druckkopf zu bewegen. Vorzugsweise ist die Steuer- und/oder Regeleinheit dazu ausgebildet, eine Filamentausgabe aus dem Druckkopf zu steuern und/oder zu regeln. Vorzugsweise ist der Druckkopf beheizbar, wobei mittels der Steuer- und/oder Regeleinheit eine Temperatur des Druckkopfs regelbar ist. Vorzugsweise ist die Steuer- und/oder Regeleinheit dazu ausgebildet, den zumindest einen Druckkopf derart zu bewegen, dass der Druckkopf das Filament zu einem Formen der dentalen Vorrichtung in/auf einem Druckbett, insbesondere auf einer Druckplatte, ausgibt. Vorzugsweise ist das Druckbett, insbesondere die Druckplatte, und/oder der Druckkopf beheizbar ausgebildet. Vorzugsweise weist die 3D-Filament-Druckvorrichtung eine Heizeinheit auf zu einem Beheizen des Druckbetts, insbesondere der Druckplatte und/oder des Druckkopfs, welche insbesondere mit der Steuer- und/oder Regeleinheit verbunden ist. Vorzugsweise ist die Steuer- und/oder Regeleinheit dazu ausgebildet, das Druckbett, insbesondere die Druckplatte, und/oder den Druckkopf zu beheizen, bevorzugt über die Heizeinheit. Vorzugsweise ist die Steuer- und/oder Regeleinheit dazu ausgebildet, das Druckbett, insbesondere die Druckplatte, zu bewegen, insbesondere bei einem Druck. Vorzugsweise weist die 3D-Filament-Druckvorrichtung eine Aktoreinheit zu einem Bewegen der Druckplatte und/oder des Druckkopfs auf, welche insbesondere mit der Steuer- und/oder Regeleinheit verbunden ist. Vorzugsweise ist die Steuer- und/oder Regeleinheit dazu ausgebildet, das Druckbett, insbesondere die Druckplatte, und/oder den Druckkopf zu bewegen, insbesondere bei einem Druck, bevorzugt über die Aktoreinheit. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann insbesondere ein vorteilhaftes Dentalfilamentdrucksystem zur Durchführung des erfindungsgemäßen Verfahrens bereitgestellt werden. Es kann insbesondere ein Dentalfilamentdrucksystem bereitgestellt werden, bei welchem bei den gedruckten dentalen Vorrichtungen insbesondere eine aufwendige und komplizierte Nachbearbeitung vermieden werden kann. Des Weiteren können mögliche Fehlstellen insbesondere in unwichtigere, insbesondere unkritische Bereiche, verlagert werden, in welchen geringere Anforderungen hinsichtlich der Oberflächenqualität bestehen. Ferner kann die Anzahl und/oder die Oberfläche von Fehlstellen vorteilhaft gering gehalten werden. Hierdurch kann wiederum eine hohe Oberflächenqualität bei den gedruckten dentalen Vorrichtungen erreicht werden.

Des Weiteren wird vorgeschlagen, dass auf der Speichereinheit der Recheneinheit ein Algorithmus und/oder einer Kl-Anwendung gespeichert ist, welche dazu vorgesehen ist, eine Ausrichtung der dentalen Vorrichtung für den Druck selbsttätig, insbesondere mittels einer Meshanalyse, einer CAD-Datei der dentalen Vorrichtung zu wählen. Vorzugsweise ist auf der Speichereinheit ein trainierter und/oder trainierbarer Algorithmus, insbesondere Kl-Algorithmus, gespeichert, wobei der trainierte und/oder trainierbare Algorithmus, insbesondere Kl-Algorithmus, vorzugsweise Algorithmus maschinellen Lernens, von einer Recheneinheit ausgeführt wird. Insbesondere kann der Algorithmus zur Bestimmung der Ausrichtung als ein trainierter, und insbesondere trainierbarer, Algorithmus, insbesondere Kl-Algorithmus, vorzugsweise Algorithmus maschinellen Lernens, oder als ein klassischer (untrainierbarer) Algorithmus ausgebildet sein. Mittels des Auswertealgorithmus und/oder der künstlichen Intelligenz können mögliche Auswirkungen einer Veränderung der Lage der dentalen Vorrichtung während eines Drucks vorbestimmt werden und abhängig davon eine Ausrichtung gewählt werden. Dadurch kann insbesondere eine hinsichtlich der Fehlstellen optimale Drucklage der dentalen Vorrichtung bestimmt werden.

Zudem wird ein Computerprogrammprodukt und/oder eine Computerprogramm-Recheninfrastruktur vorgeschlagen, umfassend Befehle, die bei einer Ausführung des Computerprogramms durch eine Recheneinheit, vorzugsweise des Dentalfilamentdrucksystems, diese veranlassen, die Schritte des Verfahrens auszuführen.

Das erfindungsgemäße Verfahren und/oder das Dentaldrucksystem und/oder das Computerprogrammprodukt und/oder die Computerprogramm-Recheninfrastruktur soll/en hierbei nicht auf die oben beschriebene Anwendung und Ausführungsform beschränkt sein. Insbesondere kann/können das erfindungsgemäße Verfahren und/oder das Dentaldrucksystem und/oder das Computerprogrammprodukt und/oder die Computerprogramm-Recheninfrastruktur zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Dentalfilamentdrucksystem mit einer 3D-Filament-Druckvorrichtung umfassend eine Steuer- und/oder Regeleinheit und mit einem Bedienerendgerät umfassend eine Recheneinheit in einer schematischen Darstellung,
- Fig. 2: ein schematisches Ablaufdiagramm eines erfindungsgemäßen Verfahrens zu einer Herstellung einer dentalen Vorrichtung mittels des Dentalfilamentdrucksystems,
- Fig. 3: eine mittels des erfindungsgemäßen Verfahrens hergestellte erste dentale Vorrichtung sowie eine Stützstruktur nach einem Druck in einer schematischen Darstellung,
- Fig. 4: die mittels des erfindungsgemäßen Verfahrens hergestellte erste dentale Vorrichtung sowie die Stützstruktur nach einem Druck in einer weiteren schematischen Darstellung,
- Fig. 5: eine mittels des erfindungsgemäßen Verfahrens hergestellte zweite dentale Vorrichtung sowie eine Stützstruktur nach einem Druck in einer schematischen Darstellung,
- Fig. 6: die mittels des erfindungsgemäßen Verfahrens hergestellte zweite dentale Vorrichtung sowie die Stützstruktur nach einem Druck in einer weiteren schematischen Darstellung,
- Fig. 7: eine mittels des erfindungsgemäßen Verfahrens hergestellte dritte dentale Vorrichtung sowie eine Stützstruktur nach einem Druck in einer schematischen Darstellung und
- Fig. 8: die mittels des erfindungsgemäßen Verfahrens hergestellte dritte dentale Vorrichtung sowie die Stützstruktur nach einem Druck in einer weiteren schematischen Darstellung.

### Beschreibung der Ausführungsbeispiele

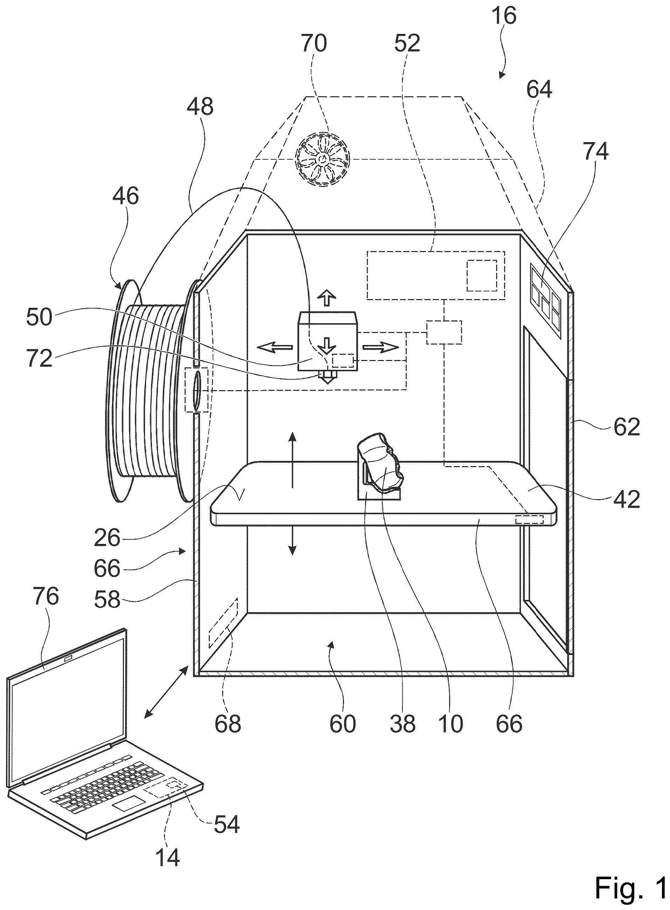

Fig. 1 zeigt ein Dentalfilamentdrucksystem mit einer 3D-Filament-Druckvorrichtung 16. Die 3D-Filament-Druckvorrichtung 16 ist insbesondere ausschließlich zum Drucken von dentalen Vorrichtungen 10, 10', 10", insbesondere von Einzelkronen, mehrgliedrigen Brücken, Dentalmodellen, Bohrschablonen, Abdrucklöffeln und/oder Alignern. Die 3D-Filament-Druckvorrichtung 16 ist zu einem ausschließlichen Drucken von zahnärztlichen und/oder kieferorthopädischen dentalen Vorrichtungen 10, 10', 10" vorgesehen. Die zahnärztlichen und/oder kieferorthopädischen dentalen Vorrichtungen 10, 10', 10" sind dabei ausschließlich Dentalmodelle, Abdrucklöffel und/oder Aligner.

Die 3D-Filament-Druckvorrichtung 16 weist eine Gehäuseeinheit 56 auf. Die Gehäuseeinheit 56 umfasst ein zumindest annähernd rechteckiges Gehäuse 58, welches einen Druckraum 60 der 3D-Filament-Druckvorrichtung 16 zu zumindest vier Seiten hin begrenzt. Die Gehäuseeinheit 56 weist ferner auf einer Vorderseite eine Tür 62 auf, über welche der Druckraum 60 zugänglich gemacht werden kann. Die Tür 62 ist an dem Gehäuse 58 schwenkbar gelagert. Ferner weist die Gehäuseeinheit 56 eine schwenkbare Haubeneinheit 64 auf, durch welche der Druckraum 60 von einer weiteren Seite zugänglich ist. Die Haubeneinheit 64 ist auf einer Oberseite des Gehäuses 58 angeordnet. Ferner weist die 3D-Filament-Druckvorrichtung 16 eine Druckplatte 66 auf. Die Druckplatte 66 ist in dem Druckraum 60 angeordnet und bildet ein Druckbett 42 aus. Die Druckplatte 66 ist beweglich gelagert. Es wäre jedoch auch denkbar, dass die Druckplatte 66 feststehend relativ zu der Gehäuseeinheit 56 ausgebildet ist. Die Druckplatte 66 ist beispielhaft über einen nicht weiter sichtbaren Aktor höhenverstellbar ausgebildet. Die Druckplatte 66 ist relativ zu einem Boden des Gehäuses 58 höhenverstellbar. Die Druckplatte 66 ist beispielhaft von einer rechteckigen Metallplatte gebildet. Die Druckplatte 66 kann temperierbar ausgebildet sein. Die Druckplatte 66 bildet eine verstellbare z-Achse aus.

Ferner weist die Gehäuseeinheit 56 zumindest einen Zuluftschlitz 68 auf, an welchem beispielhaft ein Filterelement angeordnet ist, welches auswechselbar ausgebildet ist. Der Zuluftschlitz 68 ist beispielhaft in einer Rückwand des Gehäuses 58 angeordnet. Es wäre jedoch auch eine andere, einem Fachmann als sinnvoll erscheinende Anordnung des Zuluftschlitzes 68 denkbar. In der Haubeneinheit 64 ist ein Lüfter 70 angeordnet, welcher in einem Betrieb dazu vorgesehen ist, Luft über den Zuluftschlitz 68 anzusaugen, durch den Druckraum 60 zu fördern und über die Haubeneinheit 64 abzuführen. Es wäre jedoch auch eine andere, einem Fachmann als sinnvoll erscheinende Luftführung denkbar.

Ferner weist die 3D-Filament-Druckvorrichtung 16 eine Filamentreservoireinheit 46 zu einer Aufnahme eines Filaments 48 auf. Die Filamentreservoireinheit 46 ist zu einer

Aufnahme einer Filamentrolle vorgesehen. Die Filamentrolle ist insbesondere nicht weiter sichtbar wechselbar auf einer Spindel der Filamentreservoireinheit 46 gelagert. Das Filament 48 wird während eines Betriebs mittels der Filamentreservoireinheit 46 einem Druckkopf 50 der 3D-Filament-Druckvorrichtung 16 zugeführt. Die Filamentreservoireinheit 46 weist dazu nicht weiter sichtbar einen Fördermechanismus auf, welcher dem Druckkopf 50 das Filament 48 zuführen kann. Alternativ oder zusätzlich wäre auch denkbar, dass der Druckkopf 50 einen Materialeinzug aufweist. Die 3D-Filament-Druckvorrichtung 16 weist den Druckkopf 50 auf. Der Druckkopf 50 ist dazu vorgesehen, das Filament 48 aufzuschmelzen und auszubringen, vorzugsweise auf die Druckplatte 66 bzw. dem Druckbett 42. Der Druckkopf 50 ist beweglich relativ zu der Gehäuseeinheit 56 geführt. Der Druckkopf 50 ist über Aktoren und ein Schienensystem beispielhaft in einer Ebene parallel zu einer Haupterstreckungsebene der Druckplatte 66 beweglich geführt. Der Druckkopf 50 ist in einer y- Achse und in einer x-Achse beweglich geführt. Der Druckkopf 50 ist parallel zu einer Druckebene 26 beweglich geführt. Der Druckkopf 50 kann während eines Betriebs über die Aktoren definiert bewegt werden. Der Druckkopf 50 kann beispielhaft einen Materialeinzug aufweisen. Ferner weist der Druckkopf 50 eine Heizeinheit, insbesondere eine Heizspirale, und eine Extrusionsdüse 72 auf. Die Extrusionsdüse 72 kann dabei ebenfalls beheizt ausgeführt sein. Vorzugsweise ist die Heizeinheit in die Extrusionsdüse 72 integriert.

Die 3D-Filament-Druckvorrichtung 16 weist ferner eine Steuer- und/oder Regeleinheit 52 auf. Die Steuer- und/oder Regeleinheit 52 dient zu einer Steuerung und/oder Regelung eines Betriebs der 3D-Filament-Druckvorrichtung 16. Die Steuer- und/oder Regeleinheit 52 dient zu einer Steuerung der Komponenten der 3D-Filament-Druckvorrichtung 16. Die Steuer- und/oder Regeleinheit 52 ist in einem Betrieb dazu ausgebildet, die Filamentreservoireinheit 46 dazu anzusteuern, das Filament 48 zu fördern und dem Druckkopf 50 zuzuführen. Ferner ist die Steuer- und/oder Regeleinheit 52 dazu ausgebildet, eine Ausgabe des geschmolzenen Filaments 48 aus dem Druckkopf 50 zu steuern und/oder zu regeln. Die Steuer- und/oder Regeleinheit 52 steuert dabei zudem eine Temperierung des Filaments 48 innerhalb des Druckkopfs 50. Des Weiteren ist die Steuer- und/oder Regeleinheit 52 dazu vorgesehen, den Druckkopf 50 anhand von Druckbefehlen zu einer Herstellung der dentalen Vorrichtung 10, 10', 10" zu bewegen. Die Steuer- und/oder Regeleinheit 52 steuert dazu die Aktoren des Druckkopfs 50 an. Zudem kann die Steuer- und/oder Regeleinheit 52 die Druckplatte 66 temperieren und bewegen. Ferner weist die 3D-Filament-Druckvorrichtung 16 eine Bedienerschnittstelle 74 auf, welche beispielhaft von einem Touchscreendisplay an dem Gehäuse 58 gebildet ist. Die Bedienerschnittstelle 74 ist mit der Steuer- und/oder Regeleinheit 52 gekoppelt. Über die Bedienerschnittstelle 74 kann die 3D-Filament-Druckvorrichtung 16 zumindest teilweise bedient werden. Die Bedienerschnittstelle 74 ist von einem HMI, daher einem human machine interface, gebildet.

Des Weiteren weist das Dentaldrucksystem eine Recheneinheit 14 auf, welche dazu vorgesehen ist, eine CAD-Datei der dentalen Vorrichtung 10, 10', 10" in Druckbefehle, insbesondere in einen G-Code zu konvertieren. Die Recheneinheit 14 umfasst eine Speichereinheit 54, auf welcher eine Anwendung zur Erzeugung des G-Codes, insbesondere eine Slicer-Anwendung, hinterlegt ist. Auf der Speichereinheit 54 ist eine Anwendung gespeichert, welche dazu vorgesehen ist, eine Ausrichtung der dentalen Vorrichtung 10, 10', 10" für den Druck selbsttätig zu wählen. Auf der Speichereinheit 54 ist ein Algorithmus und/oder einer Kl-Anwendung gespeichert, welche dazu vorgesehen ist, eine Ausrichtung der dentalen Vorrichtung 10, 10', 10" für den Druck selbsttätig, insbesondere mittels einer Meshanalyse, einer CAD-Datei der dentalen Vorrichtung 10, 10', 10" zu wählen. Die Anwendung ist Teil der Slicer-Anwendung. Es wäre jedoch auch denkbar, dass die Anwendung von einer separaten Anwendung gebildet ist. Die Recheneinheit 14 ist ferner dazu vorgesehen, abhängig von einem Druckauftrag ein Druckparameterpaket zu verwenden.

Das Dentaldrucksystem weist ferner ein Bedienerendgerät 76 auf, welches die Recheneinheit 14 umfasst. Das Bedienerendgerät 76 ist beispielhaft von einem Desktop-PC, einem Laptop oder einem Tablet gebildet. Bei einer Ausgestaltung als Tablet kann auf dem Bedienerendgerät 76 beispielsweise eine Applikation installiert sein, welche als Schnittstelle für den Bediener dient. Es sind jedoch auch andere, einem Fachmann als sinnvoll erscheinende Ausgestaltungen des Bedienerendgeräts 76 denkbar. Die Recheneinheit 14 ist dabei von einem Prozessor des Bedienerendgeräts 76 gebildet.

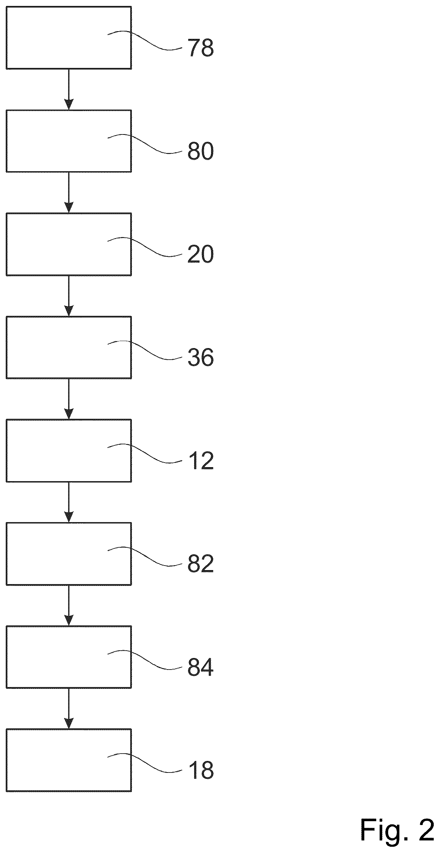

Figur 2 zeigt ein Ablaufdiagramm eines Verfahrens zu einer Herstellung der dentalen Vorrichtung 10, 10', 10", insbesondere einer Einzelkrone, einer mehrgliedrigen Brücke und/oder eines Aligners, mittels des Dentalfilamentdrucksystems. Das Verfahren beschreibt einen Betrieb des Dentaldrucksystems. Der Ablauf beschreibt dabei beispielhaft den Druckvorgang einer dentalen Vorrichtung 10, 10', 10".

Während des Verfahrens wird in einem ersten Einleseschritt 78 eine CAD-Datei an dem Bedienerendgerät 76 von der Recheneinheit 14 eingelesen. Die CAD-Datei kann beispielsweise über ein Netzwerk von einem Server oder beispielsweise über einen USB-Stick auf das Bedienerendgerät 76 übertragen werden. Auf dem Bedienerendgerät 76 wird für den Betrieb insbesondere eine Software ausgeführt. Anschließend folgt ein Auswahlschritt 80, wobei in dem Auswahlschritt 80 abhängig von einem Druckauftrag ein für den Druck der dentalen Vorrichtung 10, 10', 10" ausgelegtes Druckparameterpaket, insbesondere in Form von definierten Werten für verschiedene Druckparameter, ausgewählt und von der Recheneinheit 14 angewendet wird. Anschließend erfolgt ein Konvertierungsschritt 12, wobei in dem Konvertierungsschritt 12 eine CAD-Datei der dentalen Vorrichtung 10, 10', 10" mittels der Recheneinheit 14 in Druckbefehle konvertiert wird. Die CAD-Datei wird dabei mittels einer auf der Recheneinheit 14 ausgeführten Slicing-Software in Kombination mit dem Druckparameterpaket in Druckbefehle umgewandelt.

Vor, nach oder während des Konvertierungsschritts 12 erfolgt ein Ausrichtungsschritt 20. Es ist denkbar, dass der Ausrichtungsschritt 20 abhängig von einer Auswahl in dem Auswahlschritt 80 durchgeführt wird oder abhängig von einer Auswahl in dem Auswahlschritt 80 unterschiedlich durchgeführt wird. In dem Ausrichtungsschritt 20 wird vor dem Druckschritt 18 eine Ausrichtung der dentalen Vorrichtung 10, 10', 10" für einen Druck mittels der Recheneinheit 14 selbsttätig bestimmt. Dabei wird die Ausrichtung der dentalen Vorrichtung 10, 10', 10" derart gewählt, dass eine Kaufläche 22, 22' und/oder eine Kauflächenreferenzfläche 24 quer zu einer Druckebene 26 ausgerichtet ist. Die Recheneinheit 14 erfasst dabei selbsttätig eine Lage der Kaufläche 22, 22' und/oder der Kauflächenreferenzfläche 24 anhand der CAD-Daten. Die Kaufläche 22, 22' und/oder die Kauflächenreferenzfläche 24 weist dabei insbesondere eine Haupterstreckungsebene auf, welche von der Recheneinheit 14 selbsttätig erkannt wird. Grundsätzlich wäre jedoch auch denkbar, dass grundsätzlich und/oder bei fehlender Erkennbarkeit der Recheneinheit 14 eine Lage der Kaufläche 22, 22' und/oder der Kauflächenreferenzfläche 24 durch einen Bediener vorgeben wird und/oder die Recheneinheit 14 eine Bedieneranfrage stellt, in welcher der Bediener die Lage der Kaufläche 22, 22' und/oder der Kauflächenreferenzfläche 24 bestätigen oder angeben muss. In dem Ausrichtungsschritt 20 wird die Ausrichtung derart gewählt, dass eine Haupterstreckungsebene 28, 28', 28" der dentalen Vorrichtung 10, 10', 10" einen Winkel von mehr als 40°, vorzugsweise mehr als 50° und besonders bevorzugt mehr als 60° gegenüber einer Druckebene 26 einschließt. Bei Einzelkronen, wie bei der ersten dentalen Vorrichtung 10, und bei mehrgliedrigen Brücken, wie der zweiten dentalen Vorrichtung 10', verläuft die Haupterstreckungsebene 28, 28' jeweils im Wesentlichen parallel zu der Kaufläche 22, 22'. Bei Alignern, wie der dritten dentalen Vorrichtung 10", verläuft die Haupterstreckungsebene 28" im Wesentlichen parallel zu der Kauflächenreferenzfläche 24. Aligner und Bohrschablonen weisen eine Kauflächenreferenzfläche 24 auf, während Kronen und Brücken eine Kaufläche 22, 22' aufweisen. Ferner wird in dem Ausrichtungsschritt 20 die Ausrichtung derart gewählt wird, dass eine Richtung 30 einer maximalen Erstreckung und/oder einer maximalen Erstreckung senkrecht zu einer Haupterstreckungsrichtung 32 der dentalen Vorrichtung 10, 10', 10" senkrecht zu der Druckebene 26 ausgerichtet ist. Bei Einzelkronen, wie bei der ersten dentalen Vorrichtung 10, wird die Ausrichtung derart gewählt, dass eine Richtung 30 einer maximalen Erstreckung der dentalen Vorrichtung 10 senkrecht zu der Druckebene 26 ausgerichtet ist. Bei mehrgliedrigen Brücken, wie der zweiten dentalen Vorrichtung 10', und bei Alignern, wie der dritten dentalen Vorrichtung 10", wird die Ausrichtung derart gewählt, dass eine Richtung 30 einer maximalen Erstreckung senkrecht zu einer Haupterstreckungsrichtung 32 der dentalen Vorrichtung 10', 10" senkrecht zu der Druckebene 26 ausgerichtet ist. Die dentale Vorrichtung 10, 10', 10" wird daher insbesondere um eine y-Achse verkippt, wobei zusätzlich eine Rotation um die x-Achse erfolgen kann. Die Verkippung der dentalen Vorrichtung 10, 10', 10" erfolgt dabei automatisiert anhand der vorangegangenen Kriterien.

Zusätzlich kann die Recheneinheit 14 in dem Ausrichtungsschritt 20 eine Ausrichtung der dentalen Vorrichtung 10, 10', 10" für den Druck selbsttätig anhand zumindest eines Oberflächenanalyseparameters wählen. Bei der Bestimmung der Ausrichtung können insbesondere ein oder mehrere Oberflächenanalyseparameter berücksichtigt werden. Die Oberflächenanalyseparameter können dabei grundsätzlich unterschiedliche Gewichtungen aufweisen. Es sind verschiedene, einem Fachmann als sinnvoll erscheinende Oberflächenanalyseparameter denkbar. Ein Oberflächenanalyseparameter ist dabei beispielhaft von einem Parallelflächenanteil von Flächen 34 der dentalen Vorrichtung 10, 10', 10" gebildet, welche zumindest zwischen 0° und 10° relativ zu der Druckebene 26 ausgerichtet sind, wobei die Recheneinheit 14 in dem Ausrichtungsschritt 20 einen Parallelflächenanteil so gering wie möglich wählt. Je größer der Parallelflächenanteil ist, desto schlechter ist die durchschnittliche Oberflächenqualität. Je größer der Parallelflächenanteil also ist, desto mehr Nachbearbeitung ist erforderlich. Bei einer Bestimmung der Ausrichtung der dentalen Vorrichtung 10, 10', 10" für einen Druck wird also von der Recheneinheit 14 versucht, den Parallelflächenanteil so gering wie möglich zu halten. Ferner kann ein Oberflächenanalyseparameter beispielhaft von einer Parallelflächenposition gebildet sind, wobei die Recheneinheit 14 in dem Ausrichtungsschritt 20 Flächen 34 mit einem Winkel zwischen 0° und 10° relativ zu der Druckebene 26 in unkritische Oberflächenbereiche legt. So kann eine Parallelfläche beispielsweise auf einer Kaufläche 22, 22', auf einer bukkalen Seitenfläche, auf einer mesialen Seitenfläche, auf einer palatinalen Seitenfläche, auf einer distalen Seitenfläche, auf einer lingualen Seitenfläche, auf einer Innenfläche oder in einem Übergangsbereich zwischen zwei Flächen angeordnet sein. Die verschiedenen Flächen weisen dabei insbesondere unterschiedliche Qualitätsanforderungen auf, sodass Parallelflächen abhängig von ihrer funktionalen Position unterschiedlich negativen Einfluss auf ein Druckergebnis bzw. die gedruckte dentale Vorrichtung 10, 10', 10" aufweisen. Bei einer Bestimmung der Ausrichtung der dentalen Vorrichtung 10, 10', 10" wird daher insbesondere versucht, einen negativen Einfluss der Oberflächenanalyseparameter so gering wie möglich zu halten. Die verschiedenen Oberflächenanalyseparameter können dazu insbesondere verschiedene Bewertungskriterien und verschiedene Gewichtungen aufweisen, sodass ein optimaler Wert ermittelt werden kann.

Alternativ oder zusätzlich wählt die Recheneinheit 14 in dem Ausrichtungsschritt 20 eine Ausrichtung der dentalen Vorrichtung 10, 10', 10" für den Druck selbsttätig mittels eines Algorithmus und/oder einer Kl-Anwendung, insbesondere mittels einer Meshanalyse, einer CAD-Datei der dentalen Vorrichtung 10, 10', 10", wobei zumindest eine Anzahl an Fehlstellen minimiert wird und/oder Fehlstellen in unkritische Oberflächenbereiche gelegt werden. Der Algorithmus und/oder die KI-Anwendung kann dabei beispielsweise die Oberflächenanalyseparameter analysieren und auswerten. Bei einer Meshanalyse wird insbesondere ein Mesh des Objekts der CAD-Datei im Hinblick auf eine Druckbarkeit analysiert. Dabei werden insbesondere auch die Winkel und Lagen von Teilflächen analysiert, um beispielsweise mögliche Fehlstellen bereits vor einem Druck und insbesondere auch bereits vor einer Umwandlung in Druckbefehle, insbesondere einen G-Code, zu erfassen. Mittels des Auswertealgorithmus und/oder der künstlichen Intelligenz können mögliche Auswirkungen einer Veränderung der Lage der dentalen Vorrichtung 10, 10', 10" während eines Drucks vorbestimmt werden und abhängig davon eine Ausrichtung gewählt werden. Die Druckrichtung wird so gewählt, dass das Problem, insbesondere der Fehlstellen, des Senkrechtdruckens, in eine Zone mit keiner oder wenig Beeinträchtigung bei der Behandlung führt, also beispielsweise in einen Randbereich, der nicht im direkten Kontakt zu benachbarten Zähnen steht. Durch beispielsweise die Meshanalyse und weitere Algorithmen unter Nutzung von zusätzlichen Informationen, kann die ideale Winkellage der dentalen Vorrichtung 10, 10', 10" für den Druck automatisch ermittelt werden. Die dentale Vorrichtung 10, 10', 10" wird daher insbesondere um eine y-Achse verkippt, wobei zusätzlich eine Rotation um die x-Achse erfolgen kann.

Auf den Ausrichtungsschritt 20 folgt ein Optimierungsschritt 36. In dem Optimierungsschritt 36 wird mittels der Recheneinheit 14 selbsttätig eine Stützstruktur 38, 38', 38" für den Druck der dentalen Vorrichtung 10, 10', 10" berechnet, welche mit der dentalen Vorrichtung 10, 10', 10" gedruckt wird. Die Stützstruktur 38, 38', 38" wird derart berechnet, dass ein zumindest annähernd rückstandsloses Entfernen der Stützstruktur 38, 38', 38" durch Ausbrechen möglich ist. In dem Optimierungsschritt 36 wird die Stützstruktur 38, 38', 38" derart gestaltet, dass sich ein Großteil des Stützmaterials in einer Kavität der dentalen Vorrichtung 10, 10', 10" befindet. Vorzugsweise befindet sich ein Großteil des Stützmaterials in einer rückseitigen Kavität der dentalen Vorrichtung 10, 10', 10", welche zu einer Aufnahme eines Zahnstumpfs, zumindest eines Zahns und/oder eines Implantataufbaus vorgesehen ist. In dem Optimierungsschritt 36 wird die Stützstruktur 38, 38', 38" derart gestaltet, dass eine Grundfläche 40 des Stützmaterials nicht über die dentale Vorrichtung 10, 10', 10" in einer Druckaufsicht hinausragt. Die Stützstruktur 38, 38', 38" ist derart gestaltet, dass eine Grundfläche 40 der Stützstruktur 38, 38', 38" nicht über die dentale Vorrichtung 10, 10', 10" am Ende des Druckprozesses in einer Druckaufsicht hinausragt. Bevorzugt überragt die dentale Vorrichtung 10, 10', 10" am Ende des Druckprozesses die Stützstruktur 38, 38', 38" in einer Druckaufsicht senkrecht zu der Druckebene 26. Die Stützstruktur 38, 38', 38" ist derart gestaltet, dass die dentale Vorrichtung 10, 10', 10" in dem Druckschritt 18 mittels der Stützstruktur 38, 38', 38" angehoben und frei von einem Kontakt mit einem Druckbett 42 der 3D-Filament-Druckvorrichtung 16 ist. Die dentale Vorrichtung 10, 10', 10" ist um zumindest zwei Schichten, vorzugsweise um zumindest drei Schichten von einem Druckbett 42 der 3D-Filament-Druckvorrichtung 16 abgehoben. Die Stützstruktur 38, 38', 38" bildet während des Drucks einen Sockel 44 zur lateralen Abstützung der dentalen Vorrichtung 10, 10', 10" während des Drucks aus. Die Stützstruktur 38, 38', 38" bildet unter der dentalen Vorrichtung einen massiven Sockel 44 aus, welcher zu einer Abstützung der dentalen Vorrichtung 10, 10', 10" vorgesehen ist und welcher dazu vorgesehen ist, auf die dentale Vorrichtung 10, 10', 10" wirkende laterale Kräfte abzufangen. Mittels des Sockels 44 wird ein vorteilhaft tiefer Schwerpunkt erzeugt, was bei dem durch die Ausrichtung entstehenden hochbauenden Aufbau der dentalen Vorrichtung 10, 10', 10" vorteilhaft ist.

In dem Optimierungsschritt 36 kann ferner mittels der Recheneinheit 14 selbsttätig abhängig von einer Erstreckung der dentalen Vorrichtung 10, 10', 10" senkrecht zu der Druckebene eine Drucklagenstärke für den Druck der dentalen Vorrichtung 10, 10', 10" berechnet werden. Die Recheneinheit 14 berechnet dazu mittels der Slicer-Software nach einer Ausrichtung der dentalen Vorrichtung 10, 10', 10" für den Druck in dem Ausrichtungsschritt 20, selbsttätig aus dem Z-Maß der dentalen Vorrichtung die Drucklagenstärke, insbesondere die Layerstärke, für den Druck. Die Bestimmung der Drucklagenstärke erfolgt insbesondere derart, dass alle Drucklagen der dentalen Vorrichtung 10, 10', 10" gleich hoch sind.

Anschließend folgt ein Übertragungsschritt 82, wobei in dem Übertragungsschritt 82 die Druckbefehle auf die 3D-Filament-Druckvorrichtung 16 übertragen werden. In dem Übertragungsschritt 82 werden die Druckbefehle von dem Bedienerendgerät 76 auf die 3D-Filament-Druckvorrichtung 16 übertragen. Die Druckbefehle werden anschließend von der 3D-Filament-Druckvorrichtung 16 in einem weiteren Einleseschritt 84 eingelesen. Anschließend werden die Druckbefehle in dem Druckschritt 18 ausgeführt und die dentale Vorrichtung 10, 10', 10" mit der entsprechenden Ausrichtung und mit der Stützstruktur 38, 38', 38" wird gedruckt. Anschließend kann die dentale Vorrichtung 10, 10', 10" aus dem Druckraum 60 entnommen werden und das Stützmaterial rückstandslos ausgebrochen werden.

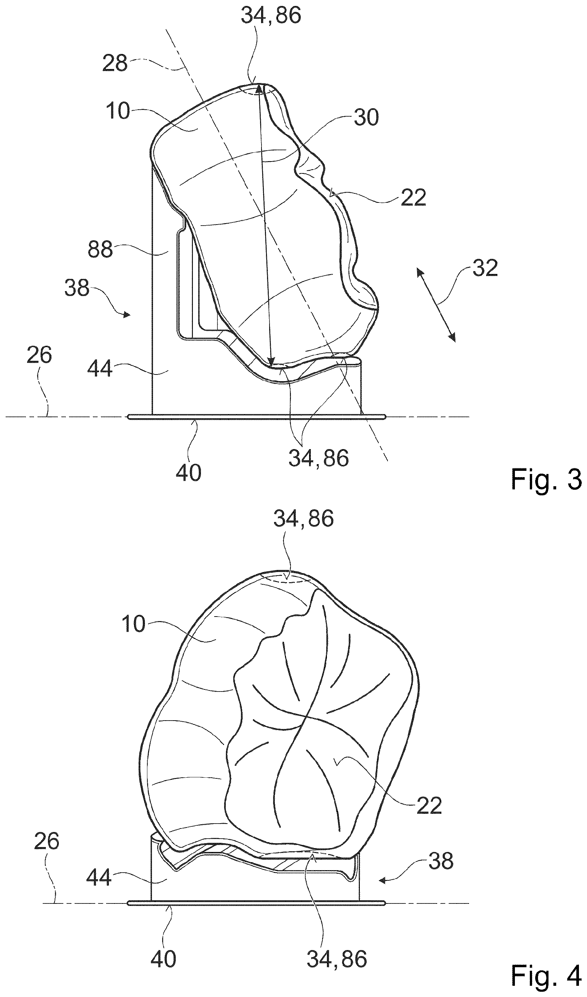

Die Figuren 3 bis 8 zeigen beispielhaft drei verschiedene dentale Vorrichtungen 10, 10', 10" direkt nach einem Druck, welche gemäß dem erfindungsgemäßen Verfahren hergestellt sind.

Die Figuren 3 und 4 zeigen eine erste dentale Vorrichtung 10 sowie eine Stützstruktur 38. Die erste dentale Vorrichtung 10 ist von einer molaren Einzelkrone gebildet. Die erste dentale Vorrichtung 10 weist eine Kaufläche 22 auf. Die erste dentale Vorrichtung 10 wurde geneigt auf das Druckbett 42 gedruckt. Eine Kaufläche 22 der ersten dentalen Vorrichtung 10 ist quer zu der Druckebene 26 ausgerichtet. Eine Haupterstreckungsebene 28 der ersten dentalen Vorrichtung 10 schließt einen Winkel von mehr als 40°, vorzugsweise mehr als 50° und besonders bevorzugt mehr als 60° gegenüber einer Druckebene 26 ein. Eine Haupterstreckungsebene 28 der ersten dentalen Vorrichtung 10 schließt einen Winkel von annähernd 75° gegenüber einer Druckebene 26 ein. Die Haupterstreckungsebene 28 verläuft dabei parallel zu der Kaufläche 22. Ferner ist die erste dentale Vorrichtung 10 derart auf dem Druckbett 42 angeordnet, dass eine Richtung 30 einer maximalen Erstreckung der dentalen Vorrichtung 10' senkrecht zu der Druckebene 26 ausgerichtet ist. Die dentale Vorrichtung 10, 10', 10" wird daher insbesondere um eine y-Achse verkippt, wobei zusätzlich eine Rotation um die x-Achse erfolgen kann.

Die erste dentale Vorrichtung 10 ist dabei derart ausgerichtet, dass durch den Druck entstehende Fehlstellen in unwichtigere, insbesondere unkritische Bereiche, verlagert werden, in welchen geringere Anforderungen hinsichtlich der Oberflächenqualität bestehen. Die erste dentale Vorrichtung 10 weist, relativ zu der gedruckten Stellung, auf einer Oberseite und einer Unterseite jeweils eine Teilfläche 86 mit Fehlstellen auf, die in einen Übergangsbereich zwischen einer mesialen bzw. distalen und einer bukkalen bzw. palatinalen Seitenfläche liegen, welche keine speziellen Oberflächenanforderungen aufweisen. Die beiden Teilflächen 86 sind dabei insbesondere von Flächen 34 der dentalen Vorrichtung 10 gebildet, welche zumindest zwischen 0° und 10° relativ zu der Druckebene 26 ausgerichtet sind. Die beiden Teilflächen 86 sind von Parallelflächen gebildet.

Die Stützstruktur 38 ist derart gestaltet, dass ein zumindest annähernd rückstandsloses Entfernen der Stützstruktur 38 durch Ausbrechen möglich ist. Die Stützstruktur 38 ist derart gestaltet, dass sich ein Großteil des Stützmaterials in einer Kavität der dentalen Vorrichtung 10 befindet. Ein Großteil des Stützmaterials ist in einer rückseitigen Kavität der dentalen Vorrichtung 10 angeordnet, welche zu einer Aufnahme eines Zahnstumpfs, zumindest eines Zahns und/oder eines Implantataufbaus vorgesehen ist, und bildet eine freistehende Stehle 88, welche lediglich an einer Spitze die dentale Vorrichtung 10 abstützt. Die Stützstruktur 38 ist derart gestaltet, dass eine Grundfläche 40 des Stützmaterials nicht über die dentale Vorrichtung 10 in einer Druckaufsicht hinausragt. Die Stützstruktur 38 ist derart gestaltet, dass eine Grundfläche 40 der Stützstruktur 38 nicht über die dentale Vorrichtung 10 am Ende des Druckprozesses in einer Druckaufsicht hinausragt. Die Stützstruktur 38 ist derart gestaltet, dass die dentale Vorrichtung 10 mittels der Stützstruktur 38 angehoben und frei von einem Kontakt mit einem Druckbett 42 der 3D-Filament-Druckvorrichtung 16 ist. Die Stützstruktur 38 bildet einen Sockel 44 zur lateralen Abstützung der dentalen Vorrichtung 10 während des Drucks aus. Die Stützstruktur 38 bildet unter der dentalen Vorrichtung 10 einen massiven Sockel 44 aus, welcher zu einer Abstützung der dentalen Vorrichtung 10 vorgesehen ist und welcher dazu vorgesehen ist, auf die dentale Vorrichtung 10 wirkende laterale Kräfte abzufangen.

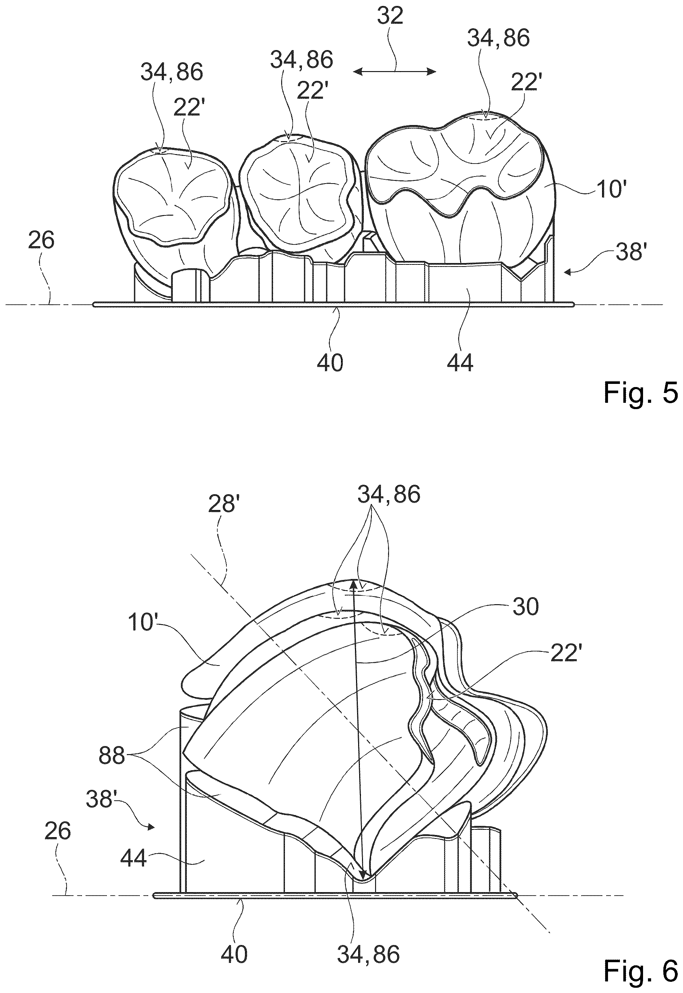

Die Figuren 5 und 6 zeigen eine zweite dentale Vorrichtung 10' sowie eine Stützstruktur 38'. Die zweite dentale Vorrichtung 10' ist von einer mehrgliedrigen Brücke gebildet. Die zweite dentale Vorrichtung 10' weist mehrere Kauflächen 22' auf. Die zweite dentale Vorrichtung 10' wurde geneigt auf das Druckbett 42 gedruckt. Die Kauflächen 22' der zweiten dentalen Vorrichtung 10' sind quer zu der Druckebene 26 ausgerichtet. Eine Haupterstreckungsebene 28 der zweiten dentalen Vorrichtung 10' schließt einen Winkel von mehr als 40°, vorzugsweise mehr als 50° und besonders bevorzugt mehr als 60° gegenüber einer Druckebene 26 ein. Eine Haupterstreckungsebene 28 der zweiten dentalen Vorrichtung 10' schließt einen Winkel von annähernd 45° gegenüber einer Druckebene 26 ein. Die Haupterstreckungsebene 28 verläuft dabei parallel zu den Kauflächen 22'. Ferner ist die zweite dentale Vorrichtung 10' derart auf dem Druckbett 42 angeordnet, dass eine Richtung 30 einer maximalen Erstreckung senkrecht zu einer Haupterstreckungsrichtung 32 der dentalen Vorrichtung 10' senkrecht zu der Druckebene 26 ausgerichtet ist. Die dentale Vorrichtung 10' wird daher insbesondere um eine y-Achse verkippt, wobei zusätzlich eine Rotation um die x-Achse erfolgen kann.

Die zweite dentale Vorrichtung 10' ist dabei derart ausgerichtet, dass durch den Druck entstehende Fehlstellen in unwichtigere, insbesondere unkritische Bereiche, verlagert werden, in welchen geringere Anforderungen hinsichtlich der Oberflächenqualität bestehen. Die zweite dentale Vorrichtung 10' weist, relativ zu der gedruckten Stellung, auf einer Oberseite und einer Unterseite jeweils kleine Teilflächen 86 mit Fehlstellen auf, die in einen Übergangsbereich zwischen einer bukkalen bzw. palatinalen bzw. lingualen Seitenfläche und einer Kaufläche 22 sowie in einem Randbereich einer in einen Übergangsbereich zwischen einer bukkalen bzw. palatinalen bzw. lingualen Seitenfläche liegen. Die Teilflächen 86 sind dabei insbesondere von Flächen 34 der dentalen Vorrichtung 10' gebildet, welche zumindest zwischen 0° und 10° relativ zu der Druckebene 26 ausgerichtet sind. Die Teilflächen 86 sind von Parallelflächen gebildet.

Die Stützstruktur 38' ist derart gestaltet, dass ein zumindest annähernd rückstandsloses Entfernen der Stützstruktur 38' durch Ausbrechen möglich ist. Die Stützstruktur 38' ist derart gestaltet, dass sich ein Großteil des Stützmaterials in Kavitäten der dentalen Vorrichtung 10' befindet. Ein Großteil des Stützmaterials ist in den drei rückseitigen Kavitäten der dentalen Vorrichtung 10' angeordnet, welche zu einer Aufnahme eines Zahnstumpfs, zumindest eines Zahns und/oder eines Implantataufbaus vorgesehen ist, und bildet drei freistehende Stehlen 88, welche jeweils lediglich an einer Spitze die dentale Vorrichtung 10' abstützen. Die Stützstruktur 38' ist derart gestaltet, dass eine Grundfläche 40 des Stützmaterials nicht über die dentale Vorrichtung 10' in einer Druckaufsicht hinausragt. Die Stützstruktur 38' ist derart gestaltet, dass eine Grundfläche 40 der Stützstruktur 38' nicht über die dentale Vorrichtung 10' am Ende des Druckprozesses in einer Druckaufsicht hinausragt. Die Stützstruktur 38' ist derart gestaltet, dass die dentale Vorrichtung 10' mittels der Stützstruktur 38' angehoben und frei von einem Kontakt mit einem Druckbett 42 der 3D-Filament-Druckvorrichtung 16 ist. Die Stützstruktur 38' bildet einen Sockel 44 zur lateralen Abstützung der dentalen Vorrichtung 10' während des Drucks aus. Die Stützstruktur 38 bildet unter der dentalen Vorrichtung 10' einen massiven Sockel 44 aus, welcher zu einer Abstützung der dentalen Vorrichtung 10' vorgesehen ist und welcher dazu vorgesehen ist, auf die dentale Vorrichtung 10' wirkende laterale Kräfte abzufangen.

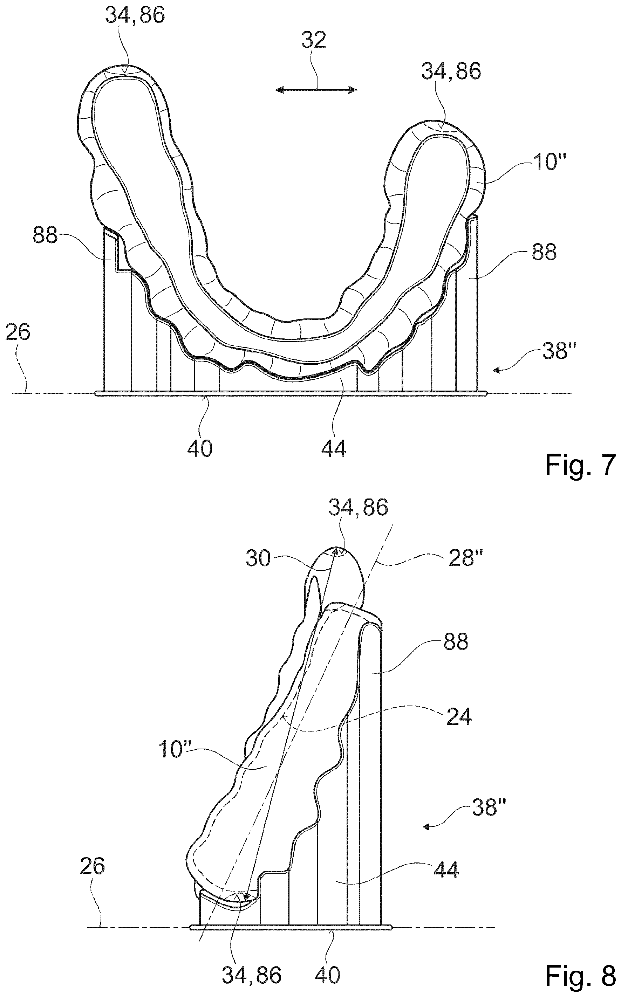

Die Figuren 7 und 8 zeigen eine dritte dentale Vorrichtung 10" sowie eine Stützstruktur 38'. Die dritte dentale Vorrichtung 10" ist von einem Aligner gebildet. Die dritte dentale Vorrichtung 10" weist eine Kauflächenreferenzfläche 24 auf. Die dritte dentale Vorrichtung 10" wurde geneigt auf das Druckbett 42 gedruckt. Die Kauflächenreferenzfläche 24 der dritten dentalen Vorrichtung 10" ist quer zu der Druckebene 26 ausgerichtet. Eine Haupterstreckungsebene 28 der dritten dentalen Vorrichtung 10" schließt einen Winkel von mehr als 40°, vorzugsweise mehr als 50° und besonders bevorzugt mehr als 60° gegenüber einer Druckebene 26 ein. Eine Haupterstreckungsebene 28 der zweiten dentalen Vorrichtung 10' schließt einen Winkel von annähernd 65° gegenüber einer Druckebene 26 ein. Die Haupterstreckungsebene 28 verläuft dabei parallel zu der Kauflächenreferenzfläche 24. Ferner ist die dritte dentale Vorrichtung 10" derart auf dem Druckbett 42 angeordnet, dass eine Richtung 30 einer maximalen Erstreckung senkrecht zu einer Haupterstreckungsrichtung 32 der dentalen Vorrichtung 10" zumindest annähernd senkrecht zu der Druckebene 26 ausgerichtet ist. Die dentale Vorrichtung 10" wird daher insbesondere um eine y-Achse verkippt, wobei zusätzlich eine Rotation um die x-Achse erfolgen kann.

Die dritte dentale Vorrichtung 10" ist dabei derart ausgerichtet, dass durch den Druck entstehende Fehlstellen in unwichtigere, insbesondere unkritische Bereiche, verlagert werden, in welchen geringere Anforderungen hinsichtlich der Oberflächenqualität bestehen. Die dritte dentale Vorrichtung 10" weist, relativ zu der gedruckten Stellung, auf einer Oberseite und einer Unterseite jeweils kleine Teilflächen 86 mit Fehlstellen auf. Zwei Teilflächen 86 sind dabei an den Enden des Bogens angeordnet und eine Teilfläche 98 ist in einem vorderen Randbereich des Aligners angeordnet. Die Teilflächen 86 sind dabei insbesondere von Flächen 34 der dentalen Vorrichtung 10' gebildet, welche zumindest zwischen 0° und 10° relativ zu der Druckebene 26 ausgerichtet sind. Die Teilflächen 86 sind von Parallelflächen gebildet.

Die Stützstruktur 38" ist derart gestaltet, dass ein zumindest annähernd rückstandsloses Entfernen der Stützstruktur 38" durch Ausbrechen möglich ist. Die Stützstruktur 38" ist derart gestaltet, dass sich ein Teil des Stützmaterials in der Kavität für den Zahnbogen der dentalen Vorrichtung 10" befindet. Ein wesentlicher Teil des Stützmaterials ist in der rückseitigen Kavität der dentalen Vorrichtung 10" zur Aufnahme des Zahnbogens angeordnet, und bildet zwei freistehende, nach außen ansteigende Stehlen 88, welche jeweils lediglich an einer Oberkante die dentale Vorrichtung 10" abstützen. Die Stützstruktur 38" ist derart gestaltet, dass eine Grundfläche 40 des Stützmaterials nicht über die dentale Vorrichtung 10" in einer Druckaufsicht hinausragt. Die Stützstruktur 38" ist derart gestaltet, dass eine Grundfläche 40 der Stützstruktur 38" nicht über die dentale Vorrichtung 10" am Ende des Druckprozesses in einer Druckaufsicht hinausragt. Die Stützstruktur 38" ist derart gestaltet, dass die dentale Vorrichtung 10' mittels der Stützstruktur 38" angehoben und frei von einem Kontakt mit einem Druckbett 42 der 3D-Filament-Druckvorrichtung 16 ist.

### Bezugszeichen

- 10: Vorrichtung
- 12: Konvertierungsschritt
- 14: Recheneinheit
- 16: 3D-Filament-Druckvorrichtung
- 18: Druckschritt
- 20: Ausrichtungsschritt
- 22: Kaufläche
- 24: Kauflächenreferenzfläche
- 26: Druckebene
- 28: Haupterstreckungsebene
- 30: Richtung
- 32: Haupterstreckungsrichtung
- 34: Fläche
- 36: Optimierungsschritt
- 38: Stützstruktur
- 40: Grundfläche
- 42: Druckbett
- 44: Sockel
- 46: Filamentreservoireinheit
- 48: Filament
- 50: Druckkopf
- 52: Steuer- und/oder Regeleinheit
- 54: Speichereinheit
- 56: Gehäuseeinheit
- 58: Gehäuse
- 60: Druckraum
- 62: Tür
- 64: Haubeneinheit
- 66: Druckplatte
- 68: Zuluftschlitz
- 70: Lüfter
- 72: Extrusionsdüse
- 74: Bedienerschnittstelle
- 76: Bedienerendgerät
- 78: Einleseschritt
- 80: Auswahlschritt
- 82: Übertragungsschritt
- 84: Einleseschritt
- 86: Teilfläche
- 88: Stehle

## Patentansprüche

1. Verfahren zu einer Herstellung einer dentalen Vorrichtung (10, 10', 10"), insbesondere einer Einzelkrone, einer mehrgliedrigen Brücke und/oder eines Aligners, mittels eines Dentalfilamentdrucksystems, wobei in zumindest einem Konvertierungsschritt (12) eine CAD-Datei der dentalen Vorrichtung (10, 10', 10") mittels einer Recheneinheit (14) in Druckbefehle konvertiert wird und wobei die Druckbefehle mittels der 3D-Filament-Druckvorrichtung (16) in einem Druckschritt (18) ausgeführt werden und die dentale Vorrichtung (10, 10', 10") gedruckt wird,
**dadurch gekennzeichnet, dass**
in zumindest einem Ausrichtungsschritt (20) vor dem Druckschritt (18) eine Ausrichtung der dentalen Vorrichtung (10, 10', 10") für einen Druck, insbesondere mittels der Recheneinheit (14), insbesondere selbsttätig, bestimmt wird, wobei die Ausrichtung derart gewählt wird, dass eine Kaufläche (22, 22') und/oder eine Kauflächenreferenzfläche (24) quer zu einer Druckebene (26) ausgerichtet ist.

2. Verfahren nach Anspruch 1,
**dadurch gekennzeichnet, dass**
in dem Ausrichtungsschritt (20) die Ausrichtung derart gewählt wird, dass eine Haupterstreckungsebene (28) der dentalen Vorrichtung (10, 10', 10") einen Winkel von mehr als 40°, vorzugsweise mehr als 50° und besonders bevorzugt mehr als 60° gegenüber einer Druckebene (26) einschließt.

3. Verfahren nach Anspruch 1 oder 2,
**dadurch gekennzeichnet, dass**
in dem Ausrichtungsschritt (20) die Ausrichtung derart gewählt wird, dass eine Richtung (30) einer maximalen Erstreckung und/oder einer maximalen Erstreckung senkrecht zu einer Haupterstreckungsrichtung (32) der dentalen Vorrichtung (10, 10', 10") senkrecht zu der Druckebene (26) ausgerichtet ist.

4. Verfahren nach einem der vorhergehenden Ansprüche,
**dadurch gekennzeichnet, dass**
in dem Ausrichtungsschritt (20) die Recheneinheit (14) eine Ausrichtung der dentalen Vorrichtung (10, 10', 10") für den Druck, insbesondere selbsttätig, anhand zumindest eines Oberflächenanalyseparameters wählt.

5. Verfahren nach Anspruch 4,
**dadurch gekennzeichnet, dass**
ein Oberflächenanalyseparameter von einem Parallelflächenanteil von Flächen (34) der dentalen Vorrichtung (10, 10', 10"), welche zumindest zwischen 0° und 10° relativ zu der Druckebene (26) ausgerichtet sind, gebildet ist, wobei die Recheneinheit (14) in dem Ausrichtungsschritt (20) einen Parallelflächenanteil so gering wie möglich wählt.

6. Verfahren nach Anspruch 4 oder 5,
**dadurch gekennzeichnet, dass**
ein Oberflächenanalyseparameter von einer Parallelflächenposition gebildet ist, wobei die Recheneinheit (14) in dem Ausrichtungsschritt (20) Flächen (34) mit einem Winkel zwischen 0° und 10° relativ zu der Druckebene (26) in unkritische Oberflächenbereiche legt.

7. Verfahren nach einem der vorhergehenden Ansprüche,
**dadurch gekennzeichnet, dass**
in dem Ausrichtungsschritt (20) die Recheneinheit (14) eine Ausrichtung der dentalen Vorrichtung (10, 10', 10") für den Druck selbsttätig mittels eines Algorithmus und/oder einer Kl-Anwendung, insbesondere mittels einer Meshanalyse, einer CAD-Datei der dentalen Vorrichtung (10, 10', 10") wählt, wobei zumindest eine Anzahl an Fehlstellen minimiert wird und/oder Fehlstellen in unkritische Oberflächenbereiche gelegt werden.

8. Verfahren nach einem der vorhergehenden Ansprüche,
**dadurch gekennzeichnet, dass**
in einem Optimierungsschritt (36), insbesondere mittels der Recheneinheit (14), selbsttätig eine Stützstruktur (38, 38', 38") für den Druck der dentalen Vorrichtung (10, 10', 10") berechnet wird, welche mit der dentalen Vorrichtung (10, 10', 10") gedruckt wird, wobei die Stützstruktur (38, 38', 38") derart berechnet wird, dass ein zumindest annähernd rückstandsloses Entfernen der Stützstruktur (38, 38', 38") durch Ausbrechen möglich ist.

9. Verfahren nach Anspruch 8,
**dadurch gekennzeichnet, dass**
in dem Optimierungsschritt (36) die Stützstruktur (38, 38', 38") derart gestaltet wird, dass sich ein Großteil des Stützmaterials in einer Kavität der dentalen Vorrichtung (10, 10', 10") befindet.

10. Verfahren zumindest nach Anspruch 8,
**dadurch gekennzeichnet, dass**
in dem Optimierungsschritt (36) die Stützstruktur (38, 38', 38") derart gestaltet wird, dass eine Grundfläche (40) des Stützmaterials nicht über die dentale Vorrichtung (10, 10', 10") in einer Druckaufsicht hinausragt.

11. Verfahren zumindest nach Anspruch 8,
**dadurch gekennzeichnet, dass**
die dentale Vorrichtung (10, 10', 10") in dem Druckschritt (18) mittels der Stützstruktur (38, 38', 38") angehoben ist und frei von einem Kontakt mit einem Druckbett (42) der 3D-Filament-Druckvorrichtung (16) ist.

12. Verfahren zumindest nach Anspruch 8,
**dadurch gekennzeichnet, dass**
die Stützstruktur (38, 38', 38") einen Sockel (44) zur lateralen Abstützung der dentalen Vorrichtung (10, 10', 10") während des Drucks ausbildet.

13. Verfahren nach einem der vorhergehenden Ansprüche,
**dadurch gekennzeichnet, dass**
in einem Optimierungsschritt (36), insbesondere mittels der Recheneinheit (14), selbsttätig abhängig von einer Erstreckung der dentalen Vorrichtung senkrecht zu der Druckebene eine Drucklagenstärke für den Druck der dentalen Vorrichtung (10, 10', 10") berechnet wird.

14. Dentalfilamentdrucksystem zur Durchführung eines Verfahrens zu einer Herstellung einer dentalen Vorrichtung (10, 10', 10"), insbesondere einer Einzelkrone, einer mehrgliedrigen Brücke und/oder eines Aligners, nach einem der vorhergehenden Ansprüche, mit einer 3D-Filament-Druckvorrichtung (16), insbesondere ausschließlich zum Drucken von dentalen Vorrichtungen (10, 10', 10"), welche eine Filamentreservoireinheit (46) zu einer Aufnahme eines Filaments (48), zumindest einen Druckkopf (50) und eine Steuer- und/oder Regeleinheit (52) aufweist, und mit einer Recheneinheit (14), welche dazu vorgesehen ist, eine CAD-Datei der dentalen Vorrichtung (10, 10', 10") in Druckbefehle zu konvertieren und welche zumindest eine Speichereinheit (54) umfasst.

15. Dentalfilamentdrucksystem nach Anspruch 14,
**dadurch gekennzeichnet, dass**
auf der Speichereinheit (54) der Recheneinheit (14) ein Algorithmus und/oder einer Kl-Anwendung gespeichert ist, welche dazu vorgesehen ist, eine Ausrichtung der dentalen Vorrichtung (10, 10', 10") für den Druck selbsttätig, insbesondere mittels einer Meshanalyse, einer CAD-Datei der dentalen Vorrichtung (10, 10', 10") zu wählen.

16. Computerprogrammprodukt und/oder Computerprogramm-Recheninfrastruktur, umfassend Befehle, die bei einer Ausführung des Computerprogramms durch eine Recheneinheit (14), vorzugsweise des Dentalfilamentdrucksystem nach einem der Ansprüche 14 oder 15, diese veranlassen, die Schritte des Verfahrens nach einem der Ansprüche 1 bis 13 auszuführen.
